# EUROPÄISCHE PATENTSCHRIFT

(11) **EP 2 454 133 B1**
(45) Veröffentlichungstag und Bekanntmachung des Hinweises auf die Patenterteilung: **29.03.2017**
(21) Anmeldenummer: 10724348.7
(22) Anmeldetag: 21.05.2010
(51) Int. Cl.: B60T 7/22

(54) **VERFAHREN UND VORRICHTUNG ZUM RANGIEREN EINES FAHRZEUGS**
METHOD AND DEVICE FOR VEHICLE PARKING ASSISTANCE
PROCÉDÉ ET DISPOSITIF PERMETTANT DE GARER UN VÉHICULE

(30) Priorität: 13.07.2009 DE 102009027656
(43) Veröffentlichungstag der Anmeldung: 23.05.2012
(73) Patentinhaber: Robert Bosch GmbH, 70442 Stuttgart (DE)
(72) Erfinder: CREPIN, Bettina, 70469 Stuttgart (DE); STAACK, Jochen, 70771 Leinfelden-Echterdingen (DE); FEHSE, Meike, 71254 Ditzingen (DE)
(86) Internationale Anmeldenummer: PCT/EP2010/057028
(87) Internationale Veröffentlichungsnummer: WO 2011/006701

(56) Entgegenhaltungen:
- EP-A1- 1 403 659
- EP-A1- 1 486 933
- WO-A1-2008/043852

## Beschreibung

Die vorliegende Erfindung betrifft eine Vorrichtung sowie ein Verfahren zum Rangieren eines Fahrzeugs, wobei das Rangieren des Fahrzeugs wenigstens teilweise durch die Vorrichtung ausführbar ist und wobei durch die Vorrichtung eine Aktivierung einer Fahrzeugbremseinrichtung mit einer Bremsenhydraulik zum Verzögern des Fahrzeugs ermöglicht ist, um eine Kollision mit einem Objekt im Rangierraum des Fahrzeugs zu verhindern.

### Stand der Technik

Aus der DE 197 15 622 A1 ist eine Vorrichtung zum Rangieren eines Fahrzeugs bekannt, wobei durch die Vorrichtung eine Aktivierung einer Fahrzeugbremseinrichtung mit einer Bremsenhydraulik zum Verzögern des Fahrzeugs vorgeschlagen wird. Dabei wird eine Steuerschaltung durch eine Auswerteschaltung gesteuert, wobei in der Auswerteschaltung auf Basis der mit Abstandssensoren gewonnenen Informationen sowie unter Berücksichtigung einer momentanen Fahrzeuggeschwindigkeit das Annähern an Hindernisse erkannt und für eine Abbremsung der Zeitpunkt des Bremseneingriffs und/oder ein erforderlicher Bremsendruck ermittelt wird. Die genannten Parameter zum Verzögern des Fahrzeugs zur Verhinderung einer Kollision mit einem Objekt betreffen lediglich den Zeitpunkt sowie die Stärke der Verzögerung des Fahrzeugs.

Nachteilhaft ist jedoch ein langer Anhalteweg, der zwischen der Erkennung eines Objektes im Rangierraum des Fahrzeugs bis zum tatsächlichen Stillstand des Fahrzeugs zurückgelegt wird. Beispielsweise kann eine Person oder ein Tier in den Rangierraum des Fahrzeugs zum Einparken in eine Parklücke hineinlaufen. Folglich muss ein durch die Vorrichtung zuvor bestimmter Rangierzug unterbrochen werden, wobei es vorkommen kann, dass die Person oder das Tier wenig später den Rangierraum wieder verlässt. Folglich muss die Vorrichtung das Fahrzeug verzögern bzw. anhalten und das Fahrzeug wieder beschleunigen, wenn die Person oder das Tier den Rangierraum wieder verlassen hat. Durch eine lange Verzögerung bis zum Beginn der Bremswirkung verkürzt sich jedoch der tatsächlich zur Verfügung stehende eigentliche Bremsweg, so dass ein starkes Verzögern des Fahrzeugs die Folge ist. Nach dem Verzögern des Fahrzeugs wird dieses wieder beschleunigt, sofern die Person oder das Tier den Rangierraum wieder verlassen hat. Dieser Vorgang des starken Verzögerns und des erneuten Beschleunigens wird vom Fahrer des Fahrzeugs als wenig komfortabel empfunden. Insbesondere können Objekte im Rangierraum des Fahrzeugs zu einer ruckeligen, ungleichmäßigen Bewegung des Fahrzeugs führen, die entweder durch die Vorrichtung selbst ausgeführt wird, so dass der Fahrer des Fahrzeugs lediglich das Fahrpedal oder das Bremspedal betätigen muss, oder die Vorrichtung gibt dem Fahrer über ein Display Fahranweisungen, und der Fahrer steuert das Fahrzeug selbst. Jedoch kann auch im letztgenannten Fall ein automatischer Bremseingriff erfolgen, der aufgrund der vorgenannten Problematik zu einer Verringerung des Komforts der Vorrichtung sowohl beim unterstützten als auch beim semi- oder vollautonomen Einparken führt.

Aus der WO 2008043852 A1 ist ein System zur multimodalen Bestimmung von Objekten in einem vor und/oder hinter einem Fahrzeug liegenden Blickfeld bekannt. Eine Umfelderfassung wird mittels eines Radar-Sensors durchgeführt und das Radar-Sensor Ausgangssignal einem Radarsignalanalyseverfahren zugeführt Eine visuelle Umfelderfassung wird mittels eines Videosensor durchgeführt wird und das Videoausgangssignal wird einem Videoanalyseverfahrens zugeführt. Es erfolgt eine Objektbestätigung derart, dass durch die von dem Radarsignalanalyseverfahren ermittelten Objekte mittels der durch das Videoanalyseverfahren bestimmten Objekte ein eine Verifikation durchgeführt wird. Bei Erkennung einer Gefahrensituätion kann eine autonome Notbremsung eingeleitet werden.

In der EP 1486933 A1 ist beschrieben, dass in einem Fahrerassistenzsystem bzw. in einem Verfahren zum Assistieren eines Fahrers eines Kraftfahrzeugs eine Vorhersage der aktuellen Situation des Umfelds des Kraftfahrzeugs aus erfassten Informationen über die äußere Umgebung des Kraftfahrzeugs abgeleitet wird. Es wird basierend auf dieser Situationsvorhersage eine Entscheidung über Gegenmaßnahmen getroffen, wobei eine Vorhersage der Fahrerreaktion getroffen wird, und die Fahrerreaktionsvorhersage und die Situationsvorhersage miteinander verknüpft werden, um zu einer Entscheidung über Gegenmaßnahmen zu gelangen. Dabei kann vorgesehen sein, als Gegenmaßnahme eine Überwindung des Bremslüftspiels in die Wege zu leiten. Zusätzlich oder alternativ kann der Fahrer durch einen Bremsruck oder ein Einbremsen gewarnt werden.

### Offenbarung der Erfindung

Es ist daher die Aufgabe der vorliegenden Erfindung, eine Vorrichtung zum Rangieren eines Fahrzeugs zu schaffen, die die Nachteile des vorangenannten Standes der Technik vermeidet und eine gleichmäßigere Bewegungsführung eines Fahrzeugs innerhalb eines Rangierraumes ermöglicht.

Diese Aufgabe wird ausgehend von einer Vorrichtung gemäß Anspruch 1 sowie einem Verfahren gemäß Anspruch 9 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass durch die Vorrichtung ein Voraktivieren der Bremsenhydraulik erfolgt, um einen Anhalteweg zwischen dem Fahrzeug und dem Objekt zu verkürzen.

Die Fahrzeugbremseinrichtung eines Fahrzeugs basiert grundsätzlich auf einem hydraulischen Bremssystem. Dabei wird durch ein Bremspedal und über einen Bremskraftverstärker ein Fluiddruck erzeugt, der über Fluidleitungen auf Bremsbeläge wirkt, die mit Bremsscheiben des Fahrzeugs zusammenwirken. Bevor die Bremswirkung der Bremsbeläge auf die Bremsscheiben einsetzt, muss ein Mindest-Hydraulikdruck vorhanden sein. Der Aufbau dieses Mindest-Hydraulikdruckes erfordert eine systembedingte Verzögerungszeit, über die der Anhalteweg des Fahrzeugs zwischen dem Betätigen des Bremspedals und der tatsächlichen Verzögerung des Fahrzeugs verlängert wird. Wird beim Rangieren des Fahrzeugs durch die Vorrichtung ein Voraktivieren der Bremsenhydraulik vorgesehen, kann der Anhalteweg zwischen dem Fahrzeug und dem Objekt verkürzt werden.

Das Voraktivieren der Bremsenhydraulik betrifft ein Vorbefüllen der Bremsenhydraulik mit einem Bremsenhydraulikfluid und/oder einer Fluiddruckerhöhung in der Bremsenhydraulik selbst, was auch als "Prefill" bezeichnet wird. Die Fluiddruckerhöhung kann über eine zusätzliche Pumpe erfolgen, um die Fluiddruckerhöhung in der Bremsenhydraulik zu erreichen und folglich die Fahrzeugbremseinrichtung zur Verkürzung des Anhalteweges bereits vor Einsetzen einer tatsächlichen Bremswirkung zu konditionieren.

Das Bremspedal wird entweder durch den Fahrer und/oder durch die Vorrichtung selbst betätigt. Der Anhalteweg bemisst sich folglich zwischen den Zeitpunkten der Erkennung des Objektes durch die Vorrichtung und dem Verzögern der Fahrzeugbewegung bis zum Stillstand. Die für diesen Anhalteweg erforderliche Zeitspanne setzt sich aus einer ersten Zeit, die zur Erkennung des Objektes erforderlich ist, einer zweiten Zeit, die der Reaktionszeit der Fahrzeugbremseneinrichtung entspricht und aus der dritten Zeit zusammen, die sich durch den physikalisch notwendigen Bremsweg ergibt. Mit der erfindungsgemäßen Voraktivierung der Bremsenhydraulik wird zweite, wesentliche Zeit zur Aktivierung der Bremsenhydraulik entscheidend verringert. Insbesondere kann die Fluiddruckerhöhung eine Anlage der Bremsbacken an die Bremsscheibe bewirken, so dass jeder weitere Druckaufbau in der Bremsen-hydraulik zur sofortigen Verzögerung des Fahrzeugs führt.

Es ist erfindungsgemäß vorgesehen, dass das Fahrzeug eine Erkennungseinrichtung aufweist, wobei das Vorhandensein eines Objektes durch die Erkennungsein-richtung erkennbar ist. Die Erkennungseinrichtung kann auf einem Ultraschall-, einem Infrarot- oder einem Radarsystem basieren, wie diese insbesondere bereits für Einparkhilfen bei Kraftfahrzeugen bereits bekannt sind. Mögliche Ausführungsformen von Erkennungseinrichtungen können jedoch auch LIDAR-Systeme oder weitere, optische Scannersysteme betreffen. Insbesondere kann der Rangierzug des Fahrzeugs einen Vorwärtszug oder einen Rückwärtszug betreffen, so dass die Erkennungseinrichtung entweder im vorderen Bereich oder im hinteren Bereich des Kraftfahrzeugs angeordnet ist. Das Rangieren des Fahrzeugs kann insbesondere das Einparken des Fahrzeugs in eine Parklücke betreffen, wobei die Parklücke eine Längsparklücke parallel zur Fahrtrichtung des Fahrzeugs, eine Querparklücke quer oder eine Diagonalparklücke diagonal zur Fahrtrichtung des Fahrzeugs betreffen kann.

Vorteilhafterweise ist die Erkennungseinrichtung ebenfalls zur geometrischen Erfassung der Parklücke ausgeführt, derart, dass das Fahrzeug zur Erfassung der Parklücke an der Parklücke vorbeiführbar ist. Wird nun das Fahrzeug mit der Erkennungseinrichtung an der Parklücke vorbeigeführt, kann diese die Geometrie der Parklücke abscannen. Damit wird ein Datensatz über die Parklücke geschaffen, und die Vorrichtung berechnet auf Grundlage des Datensatzes wenigstens eine Trajektorie, über die das Fahrzeug in die Parklücke rangiert werden kann.

Erst nach der Erfassung der Parklücke durch die Erkennungseinrichtung kann ein Objekt, welches beispielsweise ein bewegliches Objekt wie eine Person oder ein Tier ist, in den Rangierraum hineingelangen, so dass das Vorhandensein des beweglichen Objektes nicht Bestandteil des zuvor durch die Erkennungseinrichtung bereit-gestellten Datensatzes ist.

Gemäß einer weiteren Ausführungsform kann das Voraktivieren der Bremsenhydraulik der Fahrzeugbremseinrichtung vor Beginn oder bei Start des Vorwärtseinparkzuges und/oder des Rückwärtseinparkzuges erfolgen. Alternativ besteht die Möglichkeit, dass das Voraktivieren der Bremsenhydraulik der Fahrzeugbremseneinrichtung erst bei Erkennung des Objektes durch die Erkennungseinrichtung erfolgt. Bei langsamer Bewegung des Kraftfahrzeugs kann das Voraktivieren der Bremsenhydraulik erst bei Erkennung des Objektes hinreichend sein, um die Fahrzeugbremseinrichtung für eine Verkürzung des Anhalteweges zu konditionieren.

Das Fahrzeug weist beim Ausführen des Vorwärtseinparkzuges und/oder des Rückwärtseinparkzuges eine Geschwindigkeit auf, die von der Vorrichtung oder alternativ vom Fahrer selbst bestimmt wird. Unabhängig von der Bestimmung der Geschwindigkeit beim Ausführen der jeweiligen Züge kann weiterführend vorgesehen sein, dass bei Erkennen des Objektes durch die Erkennungseinrichtung durch die Vorrichtung eine Reduktion der Geschwindigkeit erfolgt. Die Reduktion der Geschwindigkeit erfolgt jedoch nicht bis zum Stillstand des Fahrzeugs, so dass das Fahrzeug lediglich verlangsamt wird. Dies kann auch dann erfolgen, wenn die Geschwindigkeit durch den Fahrer über das Fahrpedal bestimmt wird. Die Reduktion der Geschwindigkeit führt zu einem ruckelfreien, weicheren Bewegen des Fahrzeugs, wobei der Anhalteweg weiter verkürzt wird, wenn das Vorhandensein eines beweglichen Objektes im Rangierraum des Fahrzeugs eine Bremsung des Fahrzeugs bis zum Stillstand erforderlich machen sollte. Erfindungsgemäß kann folglich die Voraktivierung der Bremsenhydraulik und die Reduktion der Geschwindigkeit des Kraftfahrzeugs einzeln oder gleichzeitig erfolgen, wenn ein Objekt im Rangierraum des Fahrzeugs erkannt wird. Insbesondere sei angemerkt, dass die Erkennungseinrichtung sowohl zum Erfassen der Parklücke als auch zur Detektion des Objektes beim Rangieren des Fahrzeugs gleichermaßen Verwendung finden kann.

Die vorliegende Erfindung richtet sich ferner auf ein Verfahren zum Rangieren eines Fahrzeugs, wobei das Rangieren des Fahrzeugs wenigstens teilweise durch die Vorrichtung ausgeführt wird und wobei durch die Vorrichtung eine Aktivierung der Fahrzeugbremseinrichtung mit einer Bremsenhydraulik zum Verzögern des Fahrzeugs ausgeführt wird, um eine Kollision mit einem Objekt im Rangierraum des Fahrzeugs zu verhindern. Das Verfahren umfasst dabei wenigstens den Schritt des Voraktivierens der Bremsenhydraulik der Fahrzeugbremseinrichtung, um einen Anhalteweg zwischen dem Fahrzeug und dem Objekt zu verkürzen. Das Rangieren des Fahrzeugs kann einen Rückwärtseinparkzug oder eine Vorwärtseinparkzug in eine Parklücke umfassen, wobei die Bremsenhydraulik der Fahrzeugbremseinrichtung vor Beginn oder bei Start des Vorwärtseinparkzuges und/oder des Rückwärtseinparkzuges voraktiviert wird.

Die Bremsenhydraulik der Fahrzeugbremseinrichtung kann alternativ erst bei Erkennung des Objektes durch die Erkennungseinrichtung voraktiviert werden. Insbesondere kann das Verfahren den Schritt der Reduzierung der Geschwindigkeit des Fahrzeugs während des Vorwärtseinparkzuges und/oder des Rückwärtseinparkzuges umfassen, wobei die Reduzierung der Geschwindigkeit vor, während oder nach der Voraktivierung der Bremseneinrichtung erfolgen kann. Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Parksituation zum Einparken eines Fahrzeugs in eine Parklücke durch ein Rangieren, welches mit einer erfindungsgemäßen Vorrichtung ausgeführt wird, wobei die Darstellung das Fahrzeug vor Einparken in die Parklücke zeigt und
- Figur 2: die Parksituation gemäß Figur 1, wobei ein bewegliches Objekt in den Rangierraum des Fahrzeugs zum Rangieren in die Parklücke gelangt ist.

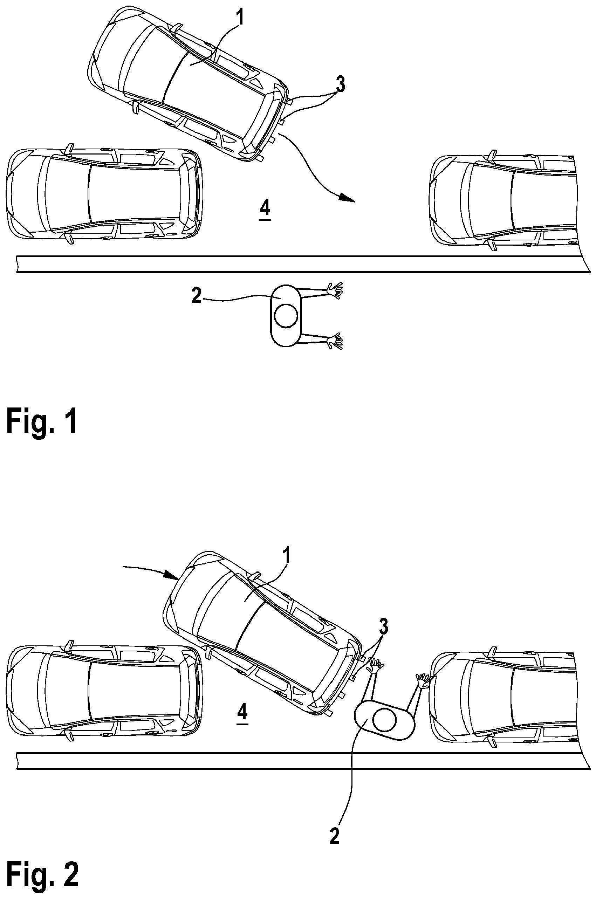

Figur 1 zeigt ein Ausführungsbeispiel der vorliegenden Erfindung mit einer Vorrichtung zum Rangieren eines Fahrzeugs 1, wobei die Vorrichtung wenigstens teilweise das Rangieren des Fahrzeugs 1 in eine Parklücke 4 ausführt. Die Ausführung des Rangierens durch die Vorrichtung betrifft beispielsweise das Bestimmen der Geschwindigkeit des Fahrzeugs 1 über eine separate Steuerung des Antriebsstranges, ohne dass der Fahrer das Fahrpedal betätigen muss. Ferner kann die Ausführung des Rangierens des Fahrzeugs 1 durch die Vorrichtung einen automatischen Eingriff in die Lenkung umfassen, so dass die Vorrichtung sowohl die Geschwindigkeit als auch die Lenkbewegung des Fahrzeugs 1 bestimmt. Hat die Vorrichtung die Parklücke 4 erfasst, und konnten entsprechende Rangierzüge zum Bewegen des Fahrzeugs 1 in die Parklücke 4 bestimmt werden, kann die Vorrichtung das Fahrzeug 1 durch den genannten Eingriff in die Parklücke 4 bewegen.

Ist der Rangierzug zum Bewegen des Fahrzeugs 1 in die Parklücke 4 bestimmt, können bewegliche Objekte, vorliegend dargestellt als eine Person 2, in den Rangierraum des Fahrzeugs 1 gelangen. Folglich kann das Vorhandensein des Objektes 2 nicht Bestandteil des Datensatzes sein, der zuvor durch die Vorrichtung mittels einer am Fahrzeug 1 vorhandenen Erkennungseinrichtung 3 über die geometrische Gestaltung der Parklücke 4 erfasst wurde. Daher ergibt sich die Notwendigkeit, in die Bewegung des Fahrzeugs 1 einzugreifen, sofern sich ein bewegliches Objekt 2 in den Rangierraum des Fahrzeugs 1 hinein bewegt. Diese Situation ist in Figur 2 dargestellt.

Figur 2 zeigt die Einparksituation des Fahrzeugs 1 in die Parklücke 4, wobei sich das bewegliche Objekt 2 in dem Rangierraum des Fahrzeugs 1 hinein bewegt hat. Durch die Erkennungseinrichtung 3 kann das Objekt 2 erkannt werden, so dass erfindungsgemäß ein Voraktivieren der Bremsenhydraulik durch die Vorrichtung erfolgen kann, um den Anhalteweg zwischen dem Fahrzeug 1 und dem Objekt 2 zu verkürzen.

Die Erkennungseinrichtung 3 kann in Gestalt mehrerer Sensoren am vorderen und - wie gezeigt - am hinteren Stoßfänger des Fahrzeugs befestigt sein, wobei die Sensoren nach Art der Sensoren für Einparkhilfen ausgeführt sein können.

Die Bewegung des Fahrzeugs 1 ist sowohl in Figur 1 als auch in Figur 2 durch Pfeile angedeutet, die die Trajektorie einer Bewegung des Fahrzeugs 1 in die Parklücke 4 beschreiben können. Das Fahrzeug 1 weist zum Gelangen in die Parklücke 4 folglich eine Geschwindigkeit entlang einer vorbestimmten Bewegungsbahn auf, wobei im Rahmen der vorliegenden Erfindung durch die Vorrichtung die Geschwindigkeit des Fahrzeugs 1 dann reduziert werden kann, wenn das Objekt 2 durch die Erkennungseinrichtung 3 erkannt wird. Die Reduktion der Geschwindigkeit des Fahrzeugs 1 kann begleitend zum Voraktivieren der Bremsenhydraulik erfolgen, um im Ergebnis ein komfortableres, ruckelfreies Verzögern und erneutes Beschleunigen des Fahrzeugs 1 bei Entfernung des Objektes 2 aus dem Rangierraum zu ermöglichen. Folglich kann die Geschwindigkeit des Fahrzeugs 1 durch die Vorrichtung nach dem Entfernen des Objektes 2 aus dem Rangierraum wieder erhöht werden, wobei es von Vorteil sein kann, das Fahrzeug 1 mit der verringerten Geschwindigkeit bis zum endgültigen Einparken des Fahrzeugs 1 in die Parklücke 4 zu bewegen, um einen Fahrer des Fahrzeugs 1 durch eine Wiederaufnahme der alten Bewegungsgeschwindigkeit des Fahrzeugs 1 nicht zu verunsichern.

Die vorliegende Erfindung beschränkt sich in Ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

## Patentansprüche

1. Vorrichtung zum Rangieren eines Fahrzeugs (1), wobei das Rangieren des Fahrzeugs (1) wenigstens teilweise durch die Vorrichtung ausführbar ist, und wobei durch die Vorrichtung eine Aktivierung einer Fahrzeugbremseinrichtung mit einer Bremsenhydraulik zum Verzögern des Fahrzeugs (1) ermöglicht ist, um eine Kollision mit einem Objekt (2) im Rangierraum des Fahrzeugs (1) zu verhindern,
wobei durch die Vorrichtung ein Voraktivieren der Bremsenhydraulik durch ein Vorbefüllen der Bremsenhydraulik mit einem Bremsenhydraulikfluid und/oder einer Fluiddruckerhöhung in der Bremsenhydraulik erfolgt, um einen Anhalteweg zwischen dem Fahrzeug (1) und dem Objekt (2) zu verkürzen, wobei das Fahrzeug (1) eine Erkennungseinrichtung (3) aufweist, wobei das Vorhandensein des Objektes (2) durch die Erkennungseinrichtung (3) erkennbar ist, **dadurch gekennzeichnet, dass** bei Erkennen des Objektes durch die Erkennungseinrichtung zusätzlich durch die Vorrichtung eine Reduktion der Geschwindigkeit des Fahrzeugs (1) erfolgt.

2. Vorrichtung nach Anspruch 1 , **dadurch gekennzeichnet, dass** das Rangieren des Fahrzeugs (1) das Einparken des Fahrzeugs (1) in eine Parklücke (4) betrifft.

3. Vorrichtung (1) nach Anspruch 2, **dadurch gekennzeichnet, dass** die Erkennungseinrichtung (3) ferner zur geometrischen Erfassung der Parklücke (4) ausgeführt ist, derart, dass das Fahrzeug (1) zur Erfassung der Parklücke (4) an der Parklücke (4) vorbeiführbar ist.

4. Vorrichtung nach Anspruch 3, **dadurch gekennzeichnet, dass** das Objekt (2) ein bewegliches Objekt (2) ist, das erst nach der Erfassung der Parklücke (4) durch die Erkennungseinrichtung (3) in den Rangierraum hineingelangt ist.

5. Vorrichtung nach einem der Ansprüche 3 oder 4, **dadurch gekennzeichnet, dass** das Rangieren des Fahrzeugs (1) einen Rückwärtseinparkzug und/oder einen Vorwärtseinparkzug in die Parklücke (4) umfasst.

6. Vorrichtung nach Anspruch 5, **dadurch gekennzeichnet, dass** das Voraktivieren der Bremsenhydraulik der Fahrzeugbremseinrichtung vor Beginn oder bei Start des Vorwärtseinparkzuges und/oder des Rückwärtseinparkzuges erfolgt.

7. Vorrichtung nach einem der Ansprüche 1 bis 6, **dadurch gekennzeichnet, dass** das Voraktivieren der Bremsenhydraulik der Fahrzeugbremseinrichtung bei Erkennung des Objektes (2) durch die Erkennungseinrichtung (3) erfolgt.

8. Vorrichtung nach einem der vorgenannten Ansprüche, **dadurch gekennzeichnet, dass** das Fahrzeug (1) bei Ausführen des Vorwärtseinparkzuges und/oder des Rückwärtseinparkzuges eine Geschwindigkeit aufweist, wobei bei Erkennen des Objektes (2) durch die Erkennungseinrichtung (3) durch die Vorrichtung eine Reduktion der Geschwindigkeit erfolgt.

9. Verfahren zum Rangieren eines Fahrzeugs (1), wobei das Rangieren des Fahrzeugs (1) wenigstens teilweise durch eine Vorrichtung nach Anspruch 1 ausgeführt wird, und wobei durch die Vorrichtung eine Aktivierung einer Fahrzeugbremseinrichtung mit einer Bremsenhydraulik zum Verzögern des Fahrzeugs (1) ausgeführt wird, um eine Kollision mit einem Objekt (2) im Rangierraum des Fahrzeugs (1) zu verhindern, wobei das Verfahren den folgenden Schritt aufweist:
- Voraktivieren der Bremsenhydraulik der Fahrzeugbremseinrichtung ein Vorbefüllen der Bremsen-hydraulik mit einem Bremsenhydraulikfluid und/oder einer Fluiddruckerhöhung, um einen Anhalteweg zwischen dem Fahrzeug (1) und dem Objekt (2) zu verkürzen, wobei die Bremsenhydraulik der Fahrzeugbremseinrichtung bei Erkennung des Objektes (2) durch eine Erkennungseinrichtung (3) voraktiviert wird,
wobei das Verfahren wenigstens durch den folgenden Schritt
gekennzeichnet ist, dass
- bei Erkennen des Objektes (2) durch die Erkennungseinrichtung (3) zusätzlich durch die Vorrichtung eine Reduktion der Geschwindigkeit des Fahrzeugs (1) erfolgt.

10. Verfahren nach Anspruch 9, **dadurch gekennzeichnet, dass** das Rangieren des Fahrzeugs (1) einen Rückwärtseinparkzug oder einen Vorwärtseinparkzug in die Parklücke (4) umfasst und wobei die Bremsenhydraulik der Fahrzeugbremseinrichtung vor Beginn oder bei Start des Vorwärtseinparkzuges und/oder des Rückwärtseinparkzuges voraktiviert wird.

11. Verfahren nach Anspruch 9 oder 10, **dadurch gekennzeichnet, dass** das Fahrzeug (1) bei Ausführen des Vorwärtseinparkzuges und/oder des Rückwärtseinparkzuges eine Geschwindigkeit aufweist, wobei die Geschwindigkeit bei Erkennen des Objektes (2) durch die Erkennungseinrichtung (3) reduziert wird.

## Claims

1. Device for manoeuvring a vehicle (1), wherein the manoeuvring of the vehicle (1) can be carried out at least partially by means of the device, and wherein the device makes possible activation of a vehicle brake apparatus with brake hydraulics for decelerating the vehicle (1), in order to prevent a collision with an object (2) in the manoeuvring area of the vehicle (1),
wherein the device pre-activates the brake hydraulics by pre-filling the brake hydraulics with a brake hydraulic fluid and/or an increase in fluid pressure in the brake hydraulics, in order to shorten a stopping distance between the vehicle (1) and the object (2), wherein the vehicle (1) has a detection apparatus (3), wherein the presence of the object (2) can be detected by the detection apparatus (3), **characterized in that** when the object is detected by the detection apparatus the device additionally reduces the speed of the vehicle (1).

2. Device according to Claim 1, **characterized in that** the manoeuvring of the vehicle (1) relates to the parking of the vehicle (1) in a parking space (4).

3. Device according to Claim 2, **characterized in that** the detection apparatus (3) is also designed to perform geometric sensing of the parking space (4) in such a way that the vehicle (1) can be driven past the parking space (4) in order to sense the parking space (4).

4. Device according to Claim 3, **characterized in that** the object (2) is a movable object (2) which does not enter the manoeuvring area until after the parking space (4) has been sensed by the detection apparatus (3).

5. Device according to one of Claims 3 or 4, **characterized in that** the manoeuvring of the vehicle (1) comprises a reversing parking movement and/or a forward parking movement into the parking space (4).

6. Device according to Claim 5, **characterized in that** the brake hydraulics of the vehicle brake apparatus are pre-activated before the start or at the start of the forward parking movement and/or the reversing parking movement.

7. Device according to one of Claims 1 to 6, **characterized in that** the brake hydraulics of the vehicle brake apparatus are pre-activated when the object (2) is detected by the detection apparatus (3).

8. Device according to one of the abovementioned claims, **characterized in that** during the execution of the forward parking movement and/or of the reversing parking movement the vehicle (1) has a speed, wherein when the object (2) is detected by the detection apparatus (3) the device reduces the speed.

9. Method for manoeuvring a vehicle (1), wherein the vehicle (1) is at least partially manoeuvred by means of a device according to Claim 1, and wherein the device activates a vehicle brake apparatus with brake hydraulics for decelerating the vehicle (1), in order to prevent a collision with an object (2) in the manoeuvring area of the vehicle (1), wherein the method comprises the following step:
- pre-activation of the brake hydraulics of the vehicle brake apparatus, pre-filling of the brake hydraulics with a brake hydraulic fluid and/or increasing the fluid pressure in order to shorten a stopping distance between the vehicle (1) and the object (2), wherein the brake hydraulics of the vehicle brake apparatus are pre-activated by a detection apparatus (3) when the object (2) is detected, wherein the method is characterized at least by the following step that
when the object (2) is detected by the detection apparatus (3) the device additionally reduces the speed of the vehicle (1).

10. Method according to Claim 9, **characterized in that** the manoeuvring of the vehicle (1) comprises a reversing parking movement or a forward parking movement into the parking space (4), and wherein the brake hydraulics of the vehicle brake apparatus are pre-activated before the start or at the start of the forward parking movement and/or of the reversing parking movement.

11. Method according to Claim 9 or 10, **characterized in that** during the execution of the forward parking movement and/or of the reversing parking movement the vehicle (1) has a speed, wherein the speed is reduced by the detection apparatus (3) when the object (2) is detected.

## Revendications

1. Dispositif permettant de garer un véhicule (1), dans lequel le parcage du véhicule (1) peut être exécuté au moins partiellement par le dispositif, et dans lequel le dispositif permet d'effectuer une activation d'un système de freinage du véhicule avec un frein hydraulique pour ralentir le véhicule (1), afin d'empêcher une collision avec un objet (2) dans l'espace de parcage du véhicule (1),
dans lequel il se produit une pré-activation par le dispositif du frein hydraulique par un pré-remplissage du frein hydraulique avec un liquide de frein hydraulique et/ou une augmentation de la pression du liquide dans le frein hydraulique, pour raccourcir une distance d'arrêt entre le véhicule (1) et l'objet (2), dans lequel le véhicule (1) présente un dispostif de reconnaissance (3),
dans lequel la présence de l'objet (2) peut être reconnue par le dispositif de reconnaissance (3), **caractérisé en ce qu'**en cas de reconnaissance de l'objet par le dispositif de reconnaissance, il se produit en plus par le dispositif une diminution de la vitesse du véhicule (1).

2. Dispositif selon la revendication 1, **caractérisé en ce que** le parcage du véhicule (1) concerne le parcage du véhicule (1) dans un créneau de parcage (4).

3. Dispositif (1) selon la revendication 2, **caractérisé en ce que** le dispositif de reconnaissance (3) est en outre réalisé pour la détection géométrique du créneau de parcage (4), de telle manière que le véhicule (1) puisse être guidé devant le créneau de parcage (4) pour la détection du créneau de parcage (4).

4. Dispositif selon la revendication 3, **caractérisé en ce que** l'objet (2) est un objet mobile (2), qui ne pénètre dans l'espace de parcage qu'après la détection du créneau de parcage (4) par le dispositif de reconnaissance (3).

5. Dispositif selon l'une quelconque des revendications 3 ou 4, **caractérisé en ce que** le parcage du véhicule (1) comprend une manoeuvre de parcage en marche arrière et/ou une manoeuvre de parcage en marche avant dans le créneau de parcage (4).

6. Dispositif selon la revendication 5, **caractérisé en ce que** la pré-activation du frein hydraulique du dispositif de freinage du véhicule se produit avant le commencement ou au début de la manoeuvre de parcage en marche avant et/ou de la manoeuvre de parcage en marche arrière.

7. Dispositif selon l'une quelconque des revendications 1 à 6, **caractérisé en ce que** la pré-activation du frein hydraulique du dispositif de freinage du véhicule se produit lors de la reconnaissance de l'objet (2) par le dispositif de reconnaissance (3).

8. Dispositif selon l'une quelconque des revendications précédentes, **caractérisé en ce que** le véhicule (1) présente une vitesse lors de l'exécution de la manoeuvre de parcage en marche avant et/ou de la manoeuvre de parcage en marche arrière, dans lequel le dispositif provoque une diminution de la vitesse lors de la reconnaissance de l'objet (2) par le dispositif de reconnaissance (3).

9. Procédé permettant de garer un véhicule (1), dans lequel le parcage du véhicule (1) est effectué au moins en partie au moyen d'un dispositif selon la revendication 1, et dans lequel on effectue au moyen du dispositif une activation d'un système de freinage du véhicule avec un frein hydraulique pour ralentir le véhicule (1), afin d'empêcher une collision avec un objet (2) dans l'espace de parcage du véhicule (1), dans lequel le procédé présente l'étape suivante:
- pré-activer le frein hydraulique du dispositif de freinage du véhicule par un pré-remplissage du frein hydraulique avec un liquide hydraulique de frein et/ou par une augmentation de la pression du liquide, pour raccourcir une distance d'arrêt entre le véhicule (1) et l'objet (2), dans lequel on pré-active le frein hydraulique du dispositif de freinage du véhicule lors de la reconnaissance de l'objet (2) par un dispositif de reconnaissance (3), dans lequel le procédé est caractérisé au moins par l'étape suivante, en ce qu'il se produit en plus au moyen du dispositif une diminution de la vitesse du véhicule (1) lors de la reconnaissance de l'objet (2) par le dispositif de reconnaissance (3).

10. Procédé selon la revendication 9, **caractérisé en ce que** le parcage du véhicule (1) comprend une manoeuvre de parcage en marche arrière ou une manoeuvre de parcage en marche avant dans le créneau de parcage (4) et dans lequel le frein hydraulique du dispositif de freinage du véhicule est pré-activé avant le commencement ou au début de la manoeuvre de parcage en marche avant et/ou de la manoeuvre de parcage en marche arrière.

11. Procédé selon la revendication 9 ou 10, **caractérisé en ce que** le véhicule (1) présente une vitesse lors de l'exécution de la manoeuvre de parcage en marche avant et/ou de la manoeuvre de parcage en marche arrière, dans lequel on diminue la vitesse lors de la reconnaissance de l'objet (2) par le dispositif de reconnaissance (3).
